(19) Europäisches Patentamt European Patent Office Office européen des brevets

(11) **EP 4 323 134 B1**

(12) **EUROPEAN PATENT SPECIFICATION**

(45) Date of publication and mention of the grant of the patent:
**23.07.2025 Bulletin 2025/30**

(21) Application number: **22712868.3**

(22) Date of filing: **28.02.2022**

(51) International Patent Classification (IPC):
*B22F 3/105* (2006.01)   *B22F 3/15* (2006.01)
*B22F 7/06* (2006.01)   *B22F 3/115* (2006.01)
*B22F 10/14* (2021.01)   *B22F 10/25* (2021.01)
*B22F 10/28* (2021.01)   *B33Y 10/00* (2015.01)
*B33Y 80/00* (2015.01)   *B22F 7/04* (2006.01)

(52) Cooperative Patent Classification (CPC):
(C-Sets available)
**B33Y 10/00; B22F 3/105; B22F 3/115; B22F 3/15; B22F 7/064; B22F 10/14; B22F 10/25; B22F 10/28; B33Y 80/00;** B22F 2003/1051; B22F 2007/042; B22F 2007/045; B22F 2207/20; B22F 2998/10; B22F 2999/00;                  (Cont.)

(86) International application number:
**PCT/EP2022/054990**

(87) International publication number:
**WO 2022/218599 (20.10.2022 Gazette 2022/42)**

(54) **GRADED INTERLAYER AND METHOD OF MANUFACTURING**

GRADIENTEN-ZWISCHENSCHICHT UND VERFAHREN ZUR HERSTELLUNG

COUCHE INTERMÉDIAIRE À GRADIENT ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.04.2021 GB 202105385**

(43) Date of publication of application:
**21.02.2024 Bulletin 2024/08**

(60) Divisional application:
**25156200.5 / 4 530 071**

(73) Proprietor: **Tokamak Energy Ltd Abingdon, Oxfordshire OX14 4SD (GB)**

(72) Inventor: **MORRISON, Alasdair Thame Oxfordshire OX9 3EZ (GB)**

(74) Representative: **Marks & Clerk LLP 15 Fetter Lane London EC4A 1BW (GB)**

(56) References cited:
**US-A1- 2017 287 685**

• **VASSEN R ET AL: "Vacuum plasma spraying of functionally graded tungsten/EUROFER97 coatings for fusion applications", FUSION ENGINEERING AND DESIGN, ELSEVIER SCIENCE PUBLISHERS, AMSTERDAM, NL, vol. 133, 14 June 2018 (2018-06-14), pages 148 - 156, XP085721381, ISSN: 0920-3796, DOI: 10.1016/ J.FUSENGDES.2018.06.006**

(52) Cooperative Patent Classification (CPC): (Cont.)
Y02E 30/10; Y02P 10/25

C-Sets
B22F 2998/10, B22F 10/28, B22F 2007/042,
B22F 2207/20, B22F 2007/045;
B22F 2999/00, B22F 10/10, B22F 2007/042,
B22F 2005/005

# EP 4 323 134 B1

**Description**

<u>Field of the Invention</u>

The present invention relates to an interlayer for joining materials of dissimilar coefficient of thermal expansion (CTE) and a method of manufacturing the same.

<u>Background</u>

A divertor is a device within a tokamak plasma vessel which allows for removal of waste material and power from the plasma while the tokamak is operating. The waste material naturally arises as particles diffuse out from the magnetically confined plasma core. The waste particles are a combination of the fuel (deuterium and tritium), fusion products (helium ash), and heavier ions released from the walls of the chamber. To confine the plasma, tokamaks utilise magnetic fields. However, particles slowly and randomly diffuse out, and eventually impact one of the divertor surfaces, which are configured to withstand the high flux of ions.

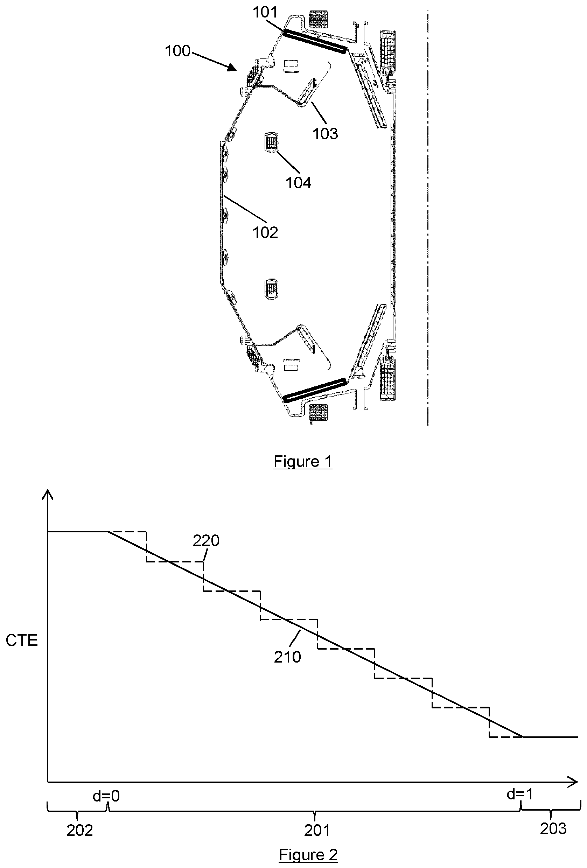

Figure 1 shows a cross section of a tokamak plasma chamber, illustrating one possible configuration of the divertor. The divertor surfaces 101 are at the top and bottom of the plasma chamber 100. The plasma chamber first wall (i.e. plasma facing components) includes the inner wall 102 of the chamber, and also includes baffles 103 located close to each divertor surface, for directing the plasma at the divertors, and covers 104 over field coils internal to the plasma chamber.

The high heat flux and erosion experienced by the surface layer of a divertor requires a material that can stand up to those conditions. A common choice is a refractory metal having a melting point over 1850°C, e.g. titanium or vanadium, more preferably over 2000°C, e.g. molybdenum, or tungsten. However, refractory metals are generally brittle, so the cooling elements of the divertor which contain a coolant under pressure are commonly made from an alternative material which is tougher(hereafter a "thermally conductive material"), such as copper.

This presents a problem - the thermal expansion coefficient of the thermally conductive material will be very different to that of the refractory metal, and there will be significant heat flux and temperature changes at the join between them. This means that a common failure mode of a divertor is damage due to stresses at this join.

The stresses at the join between the thermally conductive material and the refractory metal can be mitigated by providing an interlayer - a layer of material having a thermal expansion coefficient intermediate between that of the refractory metal and that of the thermally conductive material. The interlayer may be a composite material comprising both the refractory metal and the thermally conductive material, and may be graded such that the proportion of each material varies linearly through the interlayer, to provide a more gradual change in thermal expansion coefficient and other material mechanical and thermal properties.

However, even with such grading, failures due to thermal expansion induced stresses still occur. There is therefore a need for improvements to the interlayer to further reduce the occurrence of such failures.

While the above has been written in the context of a divertor for a nuclear fusion reactor, such interlayers are also useful in other contexts where there is a need to join two materials with different thermal expansion coefficients where temperature variations occur. The particular case of a refractory metal joined to a thermally conductive material is also relevant on the "first wall" (i.e. plasma facing surface) of a plasma chamber such as a tokamak, and to other applications where a high heat flux and high erosion are expected, such as rocket exhausts.

US2017287685A1 discloses a sputtering target assembly includes a sputtering target having a rear surface, a backing plate having a front surface, and an interlayer disposed between the target and the backing plate. The interlayer includes a first interlayer portion disposed proximate the target material rear surface, and a second interlayer portion disposed proximate the backing plate front surface. The first interlayer portion is formed of a first mixture containing a first material and a second material and having a higher concentration of the first material than the second material, and the second interlayer portion is formed of a second mixture containing the first material and the second material and having a higher concentration of the second material than the first material. A method of making is also provided.

VASSEN R ET AL: "Vacuum plasma spraying of functionally graded tungsten/EUROFER 97 coatings for fusion applications", Fusion Eng. Des. Vol 133, 14 June 2018, pages 148-156 discloses the use and manufacture of functionally graded materials for fusion power plants.

<u>Summary</u>

The scope of the present invention is defined by independent claims 1 and 8 and further embodiments of the invention are specified in dependent claims 2-7 and 9-17.

Brief Description of the Drawings

Figure 1 is a cross section of a tokamak plasma chamber;
Figure 2 shows the grading profile of exemplary known interlayers;
Figure 3 illustrates the grading profile of two proposed interlayers;
Figure 4 shows an abstraction of the grading profiles of Figure 3;
Figure 5 is an exemplary graph of the volume fractions of copper and tungsten within an interlayer;
Figure 6A shows a laminated interlayer, and Figure 6B shows the volume fraction of materials in that interlayer;
Figure 7 shows a structurally graded interlayer;
Figure 8 illustrates the HIP process;
Figure 9 illustrates an exemplary divertor; and
Figure 10 illustrates an exemplary first wall tile.

Detailed Description

Previous graded interlayers have either had a linear or stepped profile - i.e with the thermal expansion coefficient of each the interlayer either changing linearly through the interlayer, or in large discrete steps across the interlayer. Instead, this document proposes more complex grading profiles which provide improved resistance to strain caused by thermal expansion.

One way to achieve a material having a coefficient of thermal expansion (CTE) intermediate between a high thermal expansion material and a low thermal expansion material is to provide a composite material formed from both materials, with the proportion of each material determining the bulk thermal expansion coefficient. Example composite types will be described later.

Figure 2 shows the grading profile of exemplary known interlayers. Each interlayer 201 joins a high thermal expansion material 202 to a low thermal expansion material 203. In the example of a divertor for a tokamak, the high thermal expansion material may be copper and the low thermal expansion material may be tungsten. The interlayer depth "d" is the distance across the interlayer from the high thermal expansion material to the low thermal expansion material. Within this disclosure, the depth d will be measured in arbitrary units such that the transition between the high thermal expansion material 202 and the interlayer 201 is at d=0, and the transition between the low thermal expansion material 203 and the interlayer 201 is at d=1. It will be appreciated that any description relying on this definition of d can be transformed into any other scale for measuring the distance d by suitable mathematical operations, and this definition does not limit the thickness of the interlayer to 1 of any particular unit.

The "linear" interlayer 210 has a thermal expansion coefficient which decreases linearly with distance across the interlayer. While this is shown as a continuous decrease, it may be the result of e.g. a laminated composite with differing proportions of high thermal expansion and low thermal expansion layers in the different regions, with the value plotted on the graph being the effective bulk thermal expansion coefficient over a small distance.

The "stepped" interlayer 220 has a thermal expansion coefficient which decreases in a stepwise fashion with distance across the interlayer, with a linear decrease between each step.

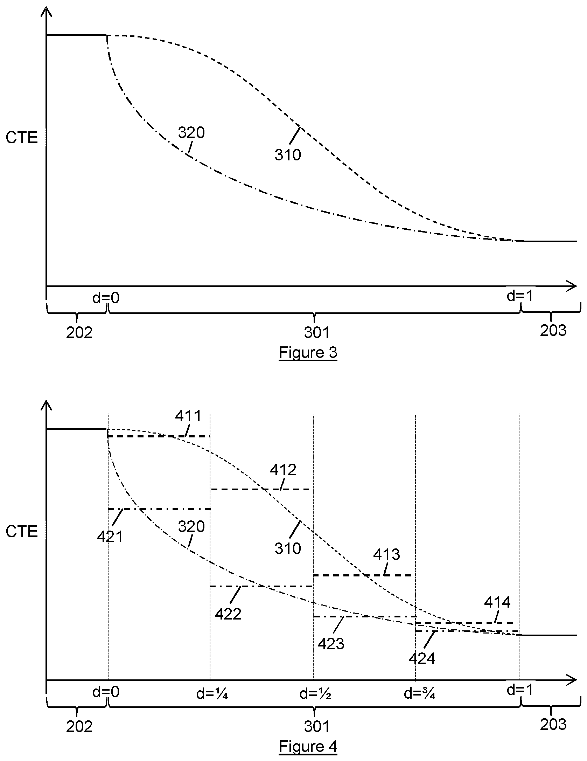

Figure 3 shows two proposals for improved interlayer gradings. Again, each interlayer 301 joins a high thermal expansion material 202 to a low thermal expansion material 203. The first exemplary interlayer, not forming part of the invention, is a "sigmoid" interlayer 310 follows a sigmoid function, i.e. a function where the slope tends to zero at each of the material layers 202, 203, and which has exactly one inflection point. This low slope at the joins between the interlayer and each material ensures that these regions have only low stress when thermal expansion occurs, and that the stress is instead in the central regions of the interlayer where material bonding is likely to be stronger.

The second exemplary interlayer 320 follows a function such that the slope of the function approaches zero monotonically towards the low thermal expansion material, i.e. the magnitude of the slope is always steady or decreasing as the function moves towards the low thermal expansion material. This results in the steepest changes in thermal expansion coefficient being adjacent to the high thermal expansion material, which provides favourable performance as the high thermal expansion material and the interlayer at that interface will generally be more ductile and compliant than the low thermal expansion material and the interlayer at the corresponding interface, and therefore able to accommodate higher stresses without failure.

One example function for the second exemplary interlayer would be a polynomial function of the form $\alpha = \sum_{k=0}^{n} a_k d^k$, where $\alpha$ is the coefficient of thermal expansion (CTE) (averaged over a small thickness, in the case of composite materials), d is the depth through the interlayer (i.e. the distance from one of the materials being joined), and $a_k$ are numerical coefficients. By selection of the coefficients $a_k$, a profile can be determined such that slope of the resulting function approaches zero monotonically at least within the range of the interlayer (0<d<1, as defined previously). For example the interlayer may follow a square function (where n=2) or a cubic function (where n=3).

While the exemplary interlayers shown in Figure 3 are idealisations, approximations to those structures will still give considerably better results than simple linear or stepped interlayers. In the present invention, "average CTE" of a region of the interlayer means the weighted average of the CTE of each material in the interlayer, weighted by the volume fraction of the material in that region.

Similar to the difference between the linear interlayer and stepped interlayer in Figure 2, a stepped equivalent to the interlayer functions described with reference to Figure 3 may be created. For the below discussion, consider an interlayer divided into N steps along its thickness, with each step taking up 1/N of the thickness of the interlayer, where N is at least 4 (to allow distinction over a stepped interlayer). The average CTE of each step has a value between the CTEs of the materials to be joined, and the average CTEs of each step decrease across the interlayer from the high thermal conductivity surface (connected to the material with high CTE) to the low thermal expansion surface (connected to the material with low CTE).

For an approximation to the sigmoid interlayer, the difference in average CTE for adjacent steps closer to the edge of the interlayer (i.e. closer to the high or low thermal expansion surfaces) will be less than the difference in average CTE for adjacent steps towards the midpoint of the interlayer.

For an approximation to the second exemplary interlayer, the difference in average CTE for adjacent steps will be greater the closer those steps are to the high thermal expansion surface.

While the above is described in terms of an interlayer constructed in discrete steps, it also applies to other constructions of an interlayer. As a first example, an interlayer which perfectly follows the functions shown in Figure 3 would also have such a variation of average CTE for N regions defined along the thickness of the interlayer. As a second example, an interlayer with a laminated construction, where the CTE at a given thickness is either a high or low value, but the average CTE over each "step" approximately follows the desired change in CTE.

The particular case of N=4 is shown in Figure 4, which demonstrates this approximation for the interlayer functions 310 and 320. The interlayer is divided into 4 sections, from d=0 to d=1/4, d=1/4 to d=1/2, d=1/2 to d=3/4, and d=3/4 to d=1. The average value of each section is shown for each interlayer (411, 412, 413, 414 for the interlayer function 310, from high to low CTE, and 421, 422, 423, 424 for the interlayer function 320, from high to low CTE). As can be seen from the figure, the differences between these averages have the relationships described above.

The N=4 case will hold for any interlayer sufficiently different from the linear interlayers of the prior art to show the desired improvements. The advantage will increase for interlayers that obey closer approximations to the smooth functions discussed above, but this will be a trade off with cost and ease of manufacture.

The interlayer may be manufactured in various ways, with the variation in the CTE being produced by alloying, powder grading, laminate grading, structural grading, or providing other composite material structures.

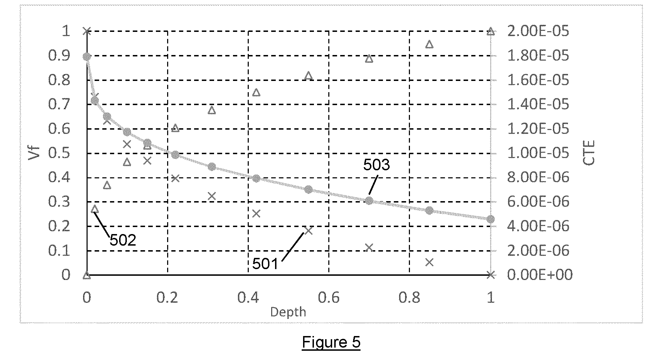

Powder grading involves providing two or more materials in powder form, and varying the volume fraction of these materials through the interlayer to produce the required variation in CTE. For example, the first powder may be the low thermal expansion material, and the second powder may be the second thermal expansion material. These powders are then mixed and sintered or otherwise bonded together, while controlling the volume fraction of each powder during the bonding, to provide a bulk CTE which varies in the required way. For example, Figure 5 shows an example graph of the volume fractions of copper 501 (high CTE) and tungsten 502 (low CTE) within an interlayer, plotted with the average CTE of the composite 503, to provide an approximately cubic polynomial interlayer. This interlayer is constructed as several discrete layers, each having a set volume fraction, but as the interlayer is built up some mixing between the individual layers will be inevitable, and diffusion between the materials will occur during sintering, resulting in a smoother overall gradient.

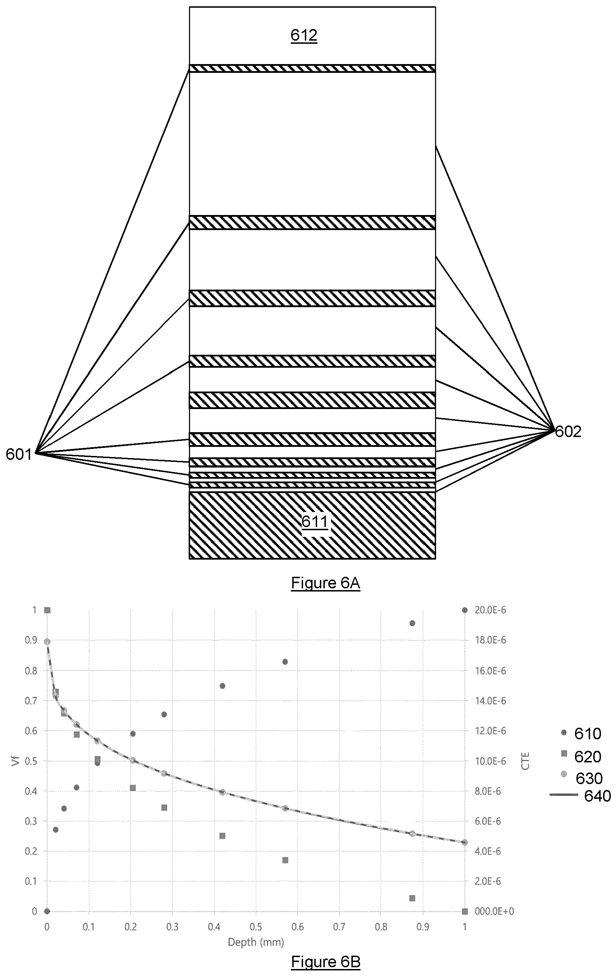

A graded interlayer may also be provided as shown in Figure 6A with a stack of parallel laminates arranged such that the interlayer has alternating layers of a first 601 and second 602 material (e.g. the high and low thermal expansion materials) where each layer has a thickness such that the average CTE (i.e. the weighted average of the CTE of each material, weighted by the volume of each material present) follows the desired grading profile. In this example, the first and second materials are the same as the high thermal expansion material 611 and the low thermal expansion material 621 to be joined. Figure 6B shows the volume fraction of tungsten 610 and copper 620 in a tungsten/copper interlayer, along with the average CTE 630 at each depth, which aligns with the desired profile 640 for the CTE.

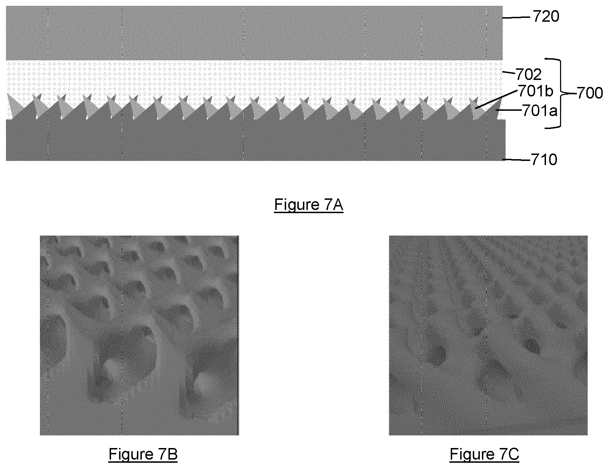

A further example is a structurally graded interlayer 700 as shown in Figure 7A, which joins a component formed from a high thermal expansion material 710 and a component formed from a low thermal expansion material 720. The interlayer 700 comprises a first section 701a, b made from the low thermal expansion material, and a second section 702 made from the high thermal expansion material, wherein the two sections interlock to form the interlayer. In the interlayer illustrated, the first section comprises sets of protrusions 701a, 701b, with the first set of protrusions 701a being angled "out of the plane" of the figure, and the second set 701b being angled into the plane. The interlocking profile is such that the average CTE of cross sections parallel to the interlayer follows the required interlayer profile of CTE vs depth. Other example structures for the first or second section include triply periodic minimal surfaces, such as a gyroid, shown in Figure 7B, or a Schwarz D structure, shown in Figure 7C. The gyroid

$$\sin x \cos y + \sin y \cos z + \sin z \cos x = 0$$

has a surface defined by the equation and the Schwarz D structure has a surface defined by the equation

$$\sin x \sin y \sin z + \sin x \cos y \cos z + \cos x \sin y \cos z + \cos x \cos y \sin z = 0$$

These and related surfaces may be used with appropriate adjustments to provide the required grading.

In the example shown in Figure 7, the low thermal expansion portion of the interlayer 701 is integral with the component formed from the low thermal expansion material, and this may alternatively or additionally be true for the high thermal expansion elements.

Other manufacturing techniques which are suitable for forming a section of the structurally graded interlayer include:

- Additive manufacturing techniques such as:

  ◦ Laser powder bed fusion
  ◦ Electron beam powder bed fusion
  ◦ Powder bed binder jetting, in which a powder is bound by polymers to create the required shape, and then the polymers are removed and the powders are sintered to bulk.
  ◦ Direct energy deposition, i.e. the impingement of material into a melt pool which is then moved to form an additive layer.

- Laser micromachining, i.e. the ablative removal of material from a surface by a laser
- Laser or electron beam surface texturing, i.e. the use of a laser or electron beam to ablate material and to provide controlled melting and solidification to manipulate surface properties
- Conventional machining
- Electro-discharge machining, i.e. the erosion of the surface by controlled electrical discharges.

Where the material of the section would form surface oxides, these may be controlled during formation or subsequently removed to ensure a good bond to the other section. Where the section is created via additive manufacturing, it may be printed directly onto the low thermal expansion material or the high thermal expansion material, as appropriate (i.e. on the material matching the material of the section).

The other section of a structurally graded interlayer may be backfilled into the first manufactured section as a powder (which can then be formed into a bulk by sintering, HIP (Hot Isostatic Pressing), FAST (Field Assisted Sintering Technique) pressing, or other suitable technique), or as a molten metal (i.e. casting). To improve bonding between the two sections, a thin layer of the material of te second section may be provided on the first section, e.g. by providing a foil of the material of the second section, or by a deposition technique such as plasma spraying or chemical vapour deposition. Where an additive manufacturing technique is used to create one section, the other section may be simultaneously created as part of the additive manufacturing technique, where such technique allows the use of two different materials.

For any of the interlayer constructions above, or any other interlayer which may be envisioned, the interlayer may be bonded to the high and low thermal expansion materials to be joined by the use any suitable process. For example a sintering process may be used, such as vacuum sintering, uniaxial pressure assisted sintering (i.e. hot pressing), current assisted sintering (e.g. field assisted sintering, spark plasma sintering, or pulsed electric current sintering), or hot isostatic pressing (HIP).

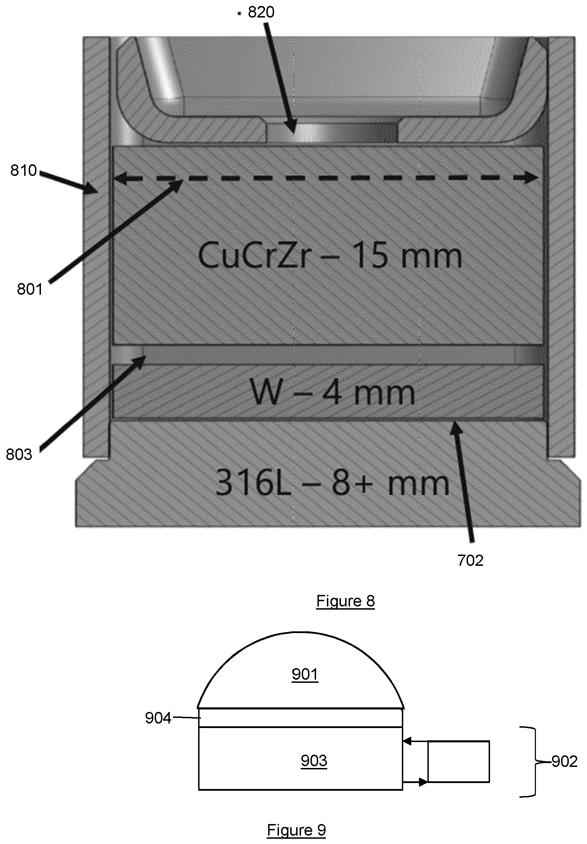

As a simplified description of the HIP process, with reference to Figure 8, the high 801 and low 802 thermal expansion materials are placed inside a canister 810 with the interlayer 803 between them (or materials which will form the interlayer during the HIP process). Air is removed and an inert gas at high pressure is provided via the port 820, and the canister is heated. The simultaneous application of heat and pressure eliminates internal voids and microporosity from the materials within the canister, providing a strong bond between the interlayer and each adjacent material, and providing strong bonds within the interlayer. HIP provides advantages in that it is relatively easier to provide even loads and thermal gradients to the material, allows for very high pressing forces, and allows for curved interlayer surfaces without special preparation.

Further manufacturing techniques which may be used to form the interlayer include:

- Powder based techniques such as:

  ◦ HIP pressing, as described above,
  ◦ FAST (Field Assisted Sintering Technique) pressing, also known as SPS (Spark Plasma Sintering)
  ◦ Sintering of one material, with controlled porosity, and the infiltration of the other material into the sintered structure
  ◦ Powder spray coating with simultaneous deposition of each material at the desired volume fraction for the given depth into the interlayer, followed by HIP or other pressing techniques
  ◦ Resistive ultrahigh pressure sintering, i.e. sintering at GPa pressures with resistive heating
  ◦ Laser deposition

- Laminate bonding techniques, such as:

  ◦ Explosive welding
  ◦ Brazing
  ◦ FAST sintering, where laminate foils are bonded by sintering in a stack using interfacial joule heating

- Physical vapour deposition, with controlled volume fraction of each material as the layers of the interlayer are built up.

Particularly where the high thermal expansion material is copper and the low thermal expansion material is tungsten, and the interlayer is also formed from these materials, it may be beneficial to provide surface treatments to the low thermal expansion material layer prior to forming the interlayer, or to low thermal expansion material components of the interlayer prior to bonding them to high thermal expansion material components. For example, in the case where the high thermal expansion material is tungsten, it will form an oxide layer which may interfere with bonding if not removed prior to the bonding process. Additionally, when powder processes are used to deposit the interlayer onto a tungsten bulk, bonding between the tungsten and the copper of the interlayer may be improved if an initial layer of copper is provided on the tungsten by some other process (e.g. brazing of a copper foil, or physical vapour deposition of copper).

As noted previously, this interlayer design is of particular use in a fusion reactor, for both the divertor and the first wall, due to the extreme temperature differences that can be experienced by those components.

An exemplary divertor is shown schematically in Figure 9. The divertor comprises a divertor surface 901 formed from a refractory metal, a cooling system 902 comprising a copper heatsink 903, and an interlayer 904 according to the previous description which joins the divertor surface to the copper heatsink. Using this structure, the divertor surface is thermally joined in an effective way to the copper heatsink, allowing the cooling system to cool the divertor effectively, and greatly reducing damage from thermal expansion caused by the extreme heat loads on the divertor.

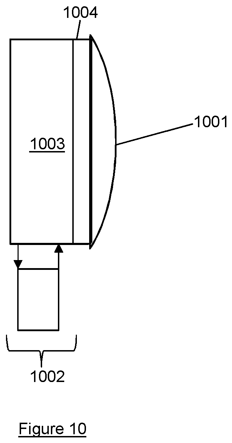

An exemplary first wall tile is shown in Figure 10. The first wall tile comprises a first wall surface 1001 formed from a refractory metal, a cooling system 1002 comprising a copper heatsink 1003, and an interlayer 1004 according to the previous description which joins the divertor surface to the copper heatsink. Using this structure, the first wall surface is thermally joined in an effective way to the copper heatsink, allowing the cooling system to cool the first wall effectively, and greatly reducing damage from thermal expansion caused by the extreme transient heat loads on the first wall. While a tile is illustrated in Figure 10, the same structure may be applied to any construction of the first wall.

As an alternative approach to the use of a refractory metal for the first wall surface, the first wall surface may be formed from a metal with a low atomic number, e.g. beryllium. While such a metal will not have the plasma resistance of a refractory metal, any atoms of the metal which do enter the plasma will have minimal effect due to the low atomic number.

It will be appreciated that where "coefficient of thermal expansion" is used above, this may be the linear, area, or volumetric coefficient of thermal expansion. In the event that the linear or area coefficient of thermal expansion is used and the material under consideration is not isotropic, the relevant linear direction or plane for the area is locally parallel to the join between the interlayer and each material.

Where particular metals are referred to above, alloys primarily composed of those metals may also be used.

While the particular example of a refractory metal joined to copper has been used in several places above, it will be appreciated that the interlayer may be used to join other materials. For example, the materials to be joined may both be metals. The low thermal expansion material may be a ceramic or a composite containing carbon fibre. The high thermal expansion material will be a metal, particularly for high heat flux applications where this material is used as a heatsink for a cooler.

**Claims**

1.  A method of joining first (202) and second (203) materials, wherein the first material is a metal, and the second material is a metal, a ceramic, or a composite material comprising carbon fibre wherein the first material has a coefficient of thermal expansion, CTE, which is higher than a CTE of the second material, the method comprising:

forming an interlayer (301) having a CTE which varies through the interlayer, and having a high thermal expansion surface (d=0) and a low thermal expansion surface (d=1);
bonding the first material (202) to the high thermal expansion surface of the interlayer, and the second material (203) to the low thermal expansion surface of the interlayer;
wherein:

the CTE of the interlayer varies through its depth between the CTE of the first material and the CTE of the second material;
the interlayer has first, second, third, and fourth average coefficients of thermal expansion, aCTE, defined such that each aCTE is the average coefficient of thermal expansion over one quarter of the thickness of the interlayer;

the first aCTE (421) is defined from the high thermal expansion surface and is less than the CTE of the first material;
the second aCTE (422) is defined from the midpoint of the thickness of the interlayer towards the high thermal expansion surface and is less than the first aCTE;
the third aCTE (423) is defined from the midpoint of the interlayer towards the low thermal expansion surface and is less than the second aCTE;
the fourth aCTE (424) is defined from the low thermal expansion surface and is less than the third aCTE and greater than the CTE of the second material;

wherein:

the difference between the first and second aCTE is greater than the difference between the second and third aCTE, and the difference between the second and third aCTE is greater than the difference between the third and fourth aCTE; and
the average CTE of a region of the interlayer means the weighted average of the CTE of each material in the interlayer, weighted by the volume fraction of the material in that region.

2. A method according to claim 1, wherein the interlayer is a composite material comprising a first interlayer material and a second interlayer material, the first interlayer material having a coefficient of thermal expansion at least equal to the coefficient of thermal expansion of the first material, and the second interlayer material having a coefficient of thermal expansion at most equal to the coefficient of thermal expansion of the second material.

3. A method according to claim 2, wherein the first interlayer material is the same as the first material, and the second interlayer material is the same as the second material.

4. A method according to claim 2 or 3, wherein forming the interlayer comprises powder sintering powders of the first and second interlayer material, wherein the interlayer coefficient of thermal expansion is dependent on the ratio of the amount of powder of the first interlayer material to the amount of powder of the second interlayer material.

5. A method according to claim 2 or 3, wherein forming the interlayer comprises:

providing a plurality of laminates of each of the first and second interlayer material;
bonding the laminates so as to form alternating layers of each of the first and second interlayer materials, each layer being parallel to the interlayer; wherein the coefficient of thermal expansion at a given depth into the interlayer is dependent on the thickness of the layers of each interlayer material at that depth.

6. A method according to claim 2 or 3, wherein:

the interlayer comprises a first element made from the first interlayer material and a second element made from the second interlayer material;
the elements interlock such that the proportion of each interlayer material in a cross section of the interlayer varies with depth through the interlayer;
the coefficient of thermal expansion at a given depth is dependent on the proportion of each interlayer material in a cross section at that depth.

7. A method according to any preceding claim, wherein bonding the first and second material to the interlayer comprises hot isostatic pressing, diffusion bonding, and/or field assisted sintering.

8. An interlayer (301) for joining a first material (202) and a second material (203), wherein the first material is a metal, and the second material is a metal, a ceramic, or a composite material comprising carbon fibre the interlayer having a coefficient of thermal expansion, CTE, which varies through the interlayer, and having a high thermal expansion surface (d=0) and a low thermal expansion surface (d=1), wherein:

the interlayer (301) has first, second, third, and fourth average coefficients of thermal expansion, aCTE, defined such that each aCTE is the average coefficient of thermal expansion over one quarter of the thickness of the interlayer;

the first aCTE (421) is defined from the high thermal expansion surface;
the second aCTE (422) is defined from the midpoint of the thickness of the interlayer towards the high thermal expansion surface and is less than the first aCTE;
the third aCTE (423) is defined from the midpoint of the interlayer towards the low thermal expansion surface and is less than the second aCTE;
the fourth aCTE (424) is defined from the low thermal expansion surface and is less than the third aCTE;

wherein:

the difference between the first and second aCTE is greater than the difference between the second and third aCTE, and the difference between the second and third aCTE is greater than the difference between the third and fourth aCTE; and
the average CTE of a region of the interlayer means the weighted average of the CTE of each material in the interlayer, weighted by the volume fraction of the material in that region.

9. An interlayer according to claim 8, wherein the interlayer is a composite material comprising a first interlayer material and a second interlayer material, the first interlayer material having a coefficient of thermal expansion at least equal to the coefficient of thermal expansion of the first material, and the second interlayer material having a coefficient of thermal expansion at most equal to the coefficient of thermal expansion of the second material.

10. An interlayer according to claim 9, wherein forming the interlayer comprises powder sintering powders of the first and second interlayer material; wherein the interlayer coefficient of thermal expansion is dependent on the ratio of the amount of powder of the first interlayer material to the amount of powder of the second interlayer material.

11. An interlayer according to claim 9, wherein the interlayer comprises alternating layers of each of the first and second interlayer materials, each layer being parallel to the interlayer.

12. An interlayer according to claim 9, wherein:

the interlayer comprises a first element made from the first interlayer material and a second element made from the second interlayer material;
the elements interlock such that the proportion of each interlayer material in a cross section of the interlayer varies with depth through the interlayer;
the coefficient of thermal expansion at a given depth is dependent on the proportion of each interlayer material in a cross section at that depth.

13. An interlayer according to claim 9, wherein the first interlayer material is the same as the first material and the second interlayer material is the same as the second material.

14. An apparatus comprising:

a first component formed from a first material having a first coefficient of thermal expansion, wherein the first material is a metal;
a second component formed from a second material having a second coefficient of thermal expansion which is lower than the first coefficient of thermal expansion, wherein the second material is a metal, a ceramic, or a composite material comprising carbon fibre; and

an interlayer according to any of claims 9 to 13, wherein the first component is bonded to the high thermal expansion surface of the interlayer, and the second component is bonded to the low thermal expansion surface of the interlayer;

wherein the coefficient of thermal expansion of the interlayer has a value between the first and second coefficients of thermal expansion throughout the interlayer.

15. An apparatus according to claim 14, wherein the apparatus is a divertor or first wall surface for a tokamak plasma chamber, the divertor or first wall surface comprising a plasma facing surface and a cooling arrangement, the cooling arrangement comprising a heatsink, wherein the first component is the plasma facing surface, and the second component is the heatsink.

16. An apparatus according to claim 15, wherein the first material is a refractory metal having a melting point of at least 1850°C or an alloy primarily composed of a refractory metal, and the second material is copper or an alloy primarily composed of copper.

17. An apparatus according to claim 16 wherein the refractory metal has a melting point of at least 2000°C.

**Patentansprüche**

1. Verfahren zum Verbinden eines ersten (202) und eines zweiten (203) Materials, wobei das erste Material ein Metall ist und das zweite Material ein Metall, eine Keramik oder ein Verbundmaterial, das Kohlenstofffaser umfasst, ist, wobei das erste Material einen Wärmeausdehnungskoeffizienten, CTE, aufweist, der höher ist als ein CTE des zweiten Materials, wobei das Verfahren Folgendes umfasst:

Formen einer Zwischenschicht (301), die einen CTE, der durch die Zwischenschicht variiert, aufweist und eine Oberfläche mit hoher Wärmeausdehnung (d = 0) und eine Oberfläche mit niedriger Wärmeausdehnung (d = 1) aufweist,
Bonden des ersten Materials (202) an die Oberfläche mit hoher Wärmeausdehnung der Zwischenschicht und des zweiten Materials (203) an die Oberfläche mit niedriger Wärmeausdehnung der Zwischenschicht,
wobei:

der CTE der Zwischenschicht durch ihre Tiefe zwischen dem CTE des ersten Materials und dem CTE des zweiten Materials variiert,
die Zwischenschicht einen ersten, einen zweiten, einen dritten und einen vierten durchschnittlichen Wärmeausdehnungskoeffizienten, aCTE, aufweist, der derart definiert ist, dass jeder aCTE der durchschnittliche Wärmeausdehnungskoeffizient über ein Viertel der Dicke der Zwischenschicht ist,
der erste aCTE (421) von der Oberfläche mit hoher Wärmeausdehnung aus definiert ist und geringer ist als der CTE des ersten Materials,
der zweite aCTE (422) von dem Mittelpunkt der Dicke der Zwischenschicht aus hin zu der Oberfläche mit hoher Wärmeausdehnung definiert ist und geringer ist als der erste aCTE,
der dritte aCTE (423) von dem Mittelpunkt der Zwischenschicht aus hin zu der Oberfläche mit niedriger Wärmeausdehnung definiert ist und geringer ist als der zweite aCTE,
der vierte aCTE (424) von der Oberfläche mit niedriger Wärmeausdehnung aus definiert ist und geringer ist als der dritte aCTE und größer als der CTE des zweiten Materials,
wobei:

die Differenz zwischen dem ersten und dem zweiten aCTE größer ist als die Differenz zwischen dem zweiten und dem dritten aCTE und die Differenz zwischen dem zweiten und dem dritten aCTE größer ist als die Differenz zwischen dem dritten und dem vierten aCTE und
der durchschnittliche CTE eines Bereichs der Zwischenschicht den gewichteten Durchschnitt des CTE jedes Materials in der Zwischenschicht, gewichtet nach dem Volumenanteil des Materials in diesem Bereich, bedeutet.

2. Verfahren nach Anspruch 1, wobei die Zwischenschicht ein Verbundmaterial ist, das ein erstes Zwischenschichtmaterial und ein zweites Zwischenschichtmaterial umfasst, wobei das erste Zwischenschichtmaterial einen Wärmeausdehnungskoeffizienten, mindestens gleich dem Wärmeausdehnungskoeffizienten des ersten Materials, aufweist und das zweite Zwischenschichtmaterial einen Wärmeausdehnungskoeffizienten, höchstens gleich dem Wärmeausdehnungskoeffizienten des zweiten Materials, aufweist.

3. Verfahren nach Anspruch 2, wobei das erste Zwischenschichtmaterial dasselbe ist wie das erste Material und das zweite Zwischenschichtmaterial dasselbe ist wie das zweite Material.

4. Verfahren nach Anspruch 2 oder 3, wobei das Formen der Zwischenschicht das Pulversintern von Pulvern des ersten und des zweiten Zwischenschichtmaterials umfasst, wobei der Zwischenschicht-Wärmeausdehnungskoeffizient von dem Verhältnis der Menge von Pulver des ersten Zwischenschichtmaterials zu der Menge von Pulver des zweiten Zwischenschichtmaterials abhängig ist.

5. Verfahren nach Anspruch 2 oder 3, wobei das Formen der Zwischenschicht Folgendes umfasst:

Bereitstellen einer Vielzahl von Laminaten jedes des ersten und des zweiten Zwischenschichtmaterials, Bonden der Laminate, um so abwechselnde Schichten jedes des ersten und des zweiten Zwischenschichtmaterials zu formen, wobei jede Schicht parallel zu der Zwischenschicht ist, wobei der Wärmeausdehnungskoeffizient bei einer gegebenen Tiefe in der Zwischenschicht von der Dicke der Schichten jedes Zwischenschichtmaterials bei dieser Tiefe abhängig ist.

6. Verfahren nach Anspruch 2 oder 3, wobei:

die Zwischenschicht ein erstes Element, das aus dem ersten Zwischenschichtmaterial hergestellt ist, und ein zweites Element, das aus dem zweiten Zwischenschichtmaterial hergestellt ist, umfasst, die Elemente derart ineinandergreifen, dass der Anteil jedes Zwischenschichtmaterials in einem Querschnitt der Zwischenschicht mit der Tiefe durch die Zwischenschicht variiert, der Wärmeausdehnungskoeffizient bei einer gegebenen Tiefe von dem Anteil jedes Zwischenschichtmaterials in einem Querschnitt bei dieser Tiefe abhängig ist.

7. Verfahren nach einem der vorhergehenden Ansprüche, wobei das Bonden des ersten und des zweiten Materials an die Zwischenschicht heißisostatisches Pressen, Diffusionsschweißen und/oder feldunterstütztes Sintern umfasst.

8. Zwischenschicht (301) zum Verbinden eines ersten (202) und eines zweiten (203) Materials, wobei das erste Material ein Metall ist und das zweite Material ein Metall, eine Keramik oder ein Verbundmaterial, das Kohlenstofffaser umfasst, ist, wobei die Zwischenschicht einen Wärmeausdehnungskoeffizienten, CTE, aufweist, der durch die Zwischenschicht variiert, und eine Oberfläche mit hoher Wärmeausdehnung (d = 0) und eine Oberfläche mit niedriger Wärmeausdehnung (d = 1) aufweist, wobei:

die Zwischenschicht (301) einen ersten, einen zweiten, einen dritten und einen vierten durchschnittlichen Wärmeausdehnungskoeffizienten, aCTE, aufweist, der derart definiert ist, dass jeder aCTE der durchschnittliche Wärmeausdehnungskoeffizient über ein Viertel der Dicke der Zwischenschicht ist, der erste aCTE (421) von der Oberfläche mit hoher Wärmeausdehnung aus definiert ist, der zweite aCTE (422) von dem Mittelpunkt der Dicke der Zwischenschicht aus hin zu der Oberfläche mit hoher Wärmeausdehnung definiert ist und geringer ist als der erste aCTE, der dritte aCTE (423) von dem Mittelpunkt der Zwischenschicht aus hin zu der Oberfläche mit niedriger Wärmeausdehnung definiert ist und geringer ist als der zweite aCTE, der vierte aCTE (424) von der Oberfläche mit niedriger Wärmeausdehnung aus definiert ist und geringer ist als der dritte aCTE, wobei:

die Differenz zwischen dem ersten und dem zweiten aCTE größer ist als die Differenz zwischen dem zweiten und dem dritten aCTE und die Differenz zwischen dem zweiten und dem dritten aCTE größer ist als die Differenz zwischen dem dritten und dem vierten aCTE; und der durchschnittliche CTE eines Bereichs der Zwischenschicht den gewichteten Durchschnitt des CTE jedes Materials in der Zwischenschicht, gewichtet nach dem Volumenanteil des Materials in diesem Bereich, bedeutet.

9. Zwischenschicht nach Anspruch 8, wobei die Zwischenschicht ein Verbundmaterial ist, das ein erstes Zwischenschichtmaterial und ein zweites Zwischenschichtmaterial umfasst, wobei das erste Zwischenschichtmaterial einen Wärmeausdehnungskoeffizienten, mindestens gleich dem Wärmeausdehnungskoeffizienten des ersten Materials, aufweist und das zweite Zwischenschichtmaterial einen Wärmeausdehnungskoeffizienten, höchstens gleich dem Wärmeausdehnungskoeffizienten des zweiten Materials, aufweist.

10. Zwischenschicht nach Anspruch 9, wobei das Formen der Zwischenschicht das Pulversintern von Pulvern des ersten und des zweiten Zwischenschichtmaterials umfasst, wobei der Zwischenschicht-Wärmeausdehnungskoeffizient von dem Verhältnis der Menge von Pulver des ersten Zwischenschichtmaterials zu der Menge von Pulver des zweiten Zwischenschichtmaterials abhängig ist.

11. Zwischenschicht nach Anspruch 9, wobei die Zwischenschicht abwechselnde Schichten jedes des ersten und des zweiten Zwischenschichtmaterials umfasst, wobei jede Schicht parallel zu der Zwischenschicht ist.

12. Zwischenschicht nach Anspruch 9, wobei:

die Zwischenschicht ein erstes Element, das aus dem ersten Zwischenschichtmaterial hergestellt ist, und ein zweites Element, das aus dem zweiten Zwischenschichtmaterial hergestellt ist, umfasst,
die Elemente derart ineinandergreifen, dass der Anteil jedes Zwischenschichtmaterials in einem Querschnitt der Zwischenschicht mit der Tiefe durch die Zwischenschicht variiert,
der Wärmeausdehnungskoeffizient bei einer gegebenen Tiefe von dem Anteil jedes Zwischenschichtmaterials in einem Querschnitt bei dieser Tiefe abhängig ist.

13. Zwischenschicht nach Anspruch 9, wobei das erste Zwischenschichtmaterial dasselbe ist wie das erste Material und das zweite Zwischenschichtmaterial dasselbe ist wie das zweite Material.

14. Einrichtung, die Folgendes umfasst:

eine erste Komponente, die aus einem ersten Material geformt ist, das einen ersten Wärmeausdehnungskoeffizienten aufweist, wobei das erste Material ein Metall ist,
eine zweite Komponente, die aus einem zweiten Material geformt ist, das einen zweiten Wärmeausdehnungskoeffizienten, der niedriger ist als der erste Wärmeausdehnungskoeffizient, aufweist, wobei das zweite Material ein Metall, eine Keramik oder ein Verbundmaterial, das Kohlenstofffaser umfasst, ist, und
eine Zwischenschicht nach einem der Ansprüche 9 bis 13, wobei die erste Komponente an die Oberfläche mit hoher Wärmeausdehnung der Zwischenschicht gebondet ist und die zweite Komponente an die Oberfläche mit niedriger Wärmeausdehnung der Zwischenschicht gebondet ist,
wobei der Wärmeausdehnungskoeffizient der Zwischenschicht einen Wert zwischen dem ersten und dem zweiten Wärmeausdehnungskoeffizienten durch die gesamte Zwischenschicht aufweist.

15. Einrichtung nach Anspruch 14, wobei die Einrichtung ein Divertor oder eine erste Wandfläche für eine Tokamak-Plasmakammer ist, wobei der Divertor oder die erste Wandfläche eine dem Plasma zugewandte Fläche und eine Kühlungsanordnung umfasst, wobei die Kühlungsanordnung eine Wärmesenke umfasst, wobei die erste Komponente die dem Plasma zugewandte Fläche ist und die zweie Komponente die Wärmesenke ist.

16. Einrichtung nach Anspruch 15, wobei das erste Material ein hochschmelzendes Metall, das einen Schmelzpunkt von mindestens 1 850 °C aufweist, oder eine Legierung, die hauptsächlich aus einem hochschmelzenden Metall besteht, ist und das zweite Material Kupfer oder eine Legierung, die hauptsächlich aus Kupfer besteht, ist.

17. Einrichtung nach Anspruch 16, wobei das hochschmelzende Metall einen Schmelzpunkt von mindestens 2 000 °C aufweist.

## Revendications

1. Procédé d'assemblage d'un premier (202) et d'un deuxième (203) matériau, dans lequel le premier matériau est un métal, et le deuxième matériau est un métal, une céramique, ou un matériau composite comprenant des fibres de carbone, dans lequel le premier matériau a un coefficient de dilatation thermique, CTE, supérieur à un CTE du deuxième matériau, le procédé comprenant les étapes consistant à :

former une couche intermédiaire (301) ayant un CTE qui varie à travers la couche intermédiaire, et ayant une surface à forte dilatation thermique (d = 0) et une surface à faible dilatation thermique (d = 1) ;
coller le premier matériau (202) sur la surface à forte dilatation thermique de la couche intermédiaire, et le deuxième matériau (203) sur la surface à faible dilatation thermique de la couche intermédiaire ;
dans lequel :

le CTE de la couche intermédiaire varie sur toute sa profondeur entre le CTE du premier matériau et le CTE du deuxième matériau ;
la couche intermédiaire a des premier, deuxième, troisième et quatrième coefficients moyens de dilatation thermique, aCTE, définis de telle sorte que chaque aCTE est le coefficient moyen de dilatation thermique sur un quart de l'épaisseur de la couche intermédiaire ;
le premier aCTE (421) est défini à partir de la surface à forte dilatation thermique et est inférieur au CTE du premier matériau ;
le deuxième aCTE (422) est défini à partir du milieu de l'épaisseur de la couche intermédiaire en direction de la surface à forte dilatation thermique et est inférieur au premier aCTE ;
le troisième aCTE (423) est défini à partir du point médian de l'épaisseur de la couche intermédiaire vers la surface à faible dilatation thermique et est inférieur au deuxième aCTE ;
le quatrième aCTE (424) est défini à partir de la surface à faible dilatation thermique et est inférieur au troisième aCTE et supérieur au CTE du deuxième matériau ;
dans lequel :

la différence entre le premier et le deuxième aCTE est supérieure à la différence entre le deuxième et le troisième aCTE, et la différence entre le deuxième et le troisième aCTE est supérieure à la différence entre le troisième et le quatrième aCTE ; et
le CTE moyen d'une région de la couche intermédiaire est la moyenne pondérée du CTE de chaque matériau dans la couche intermédiaire, pondérée par la fraction volumique du matériau dans cette région.

2. Procédé selon la revendication 1, dans lequel la couche intermédiaire est un matériau composite comprenant un premier matériau de la couche intermédiaire et un deuxième matériau de la couche intermédiaire, le premier matériau de la couche intermédiaire ayant un coefficient de dilatation thermique au moins égal au coefficient de dilatation thermique du premier matériau, et le deuxième matériau de la couche intermédiaire ayant un coefficient de dilatation thermique au plus égal au coefficient de dilatation thermique du deuxième matériau.

3. Procédé selon la revendication 2, dans lequel le premier matériau de la couche intermédiaire est le même que le premier matériau, et le deuxième matériau de la couche intermédiaire est le même que le deuxième matériau.

4. Procédé selon la revendication 2 ou 3, dans lequel la formation de la couche intermédiaire comprend le frittage de poudres du premier et du deuxième matériau de la couche intermédiaire, dans lequel le coefficient de dilatation thermique de la couche intermédiaire dépend du rapport entre la quantité de poudre du premier matériau de la couche intermédiaire et la quantité de poudre du deuxième matériau de la couche intermédiaire.

5. Procédé selon la revendication 2 ou 3, dans lequel la formation de la couche intermédiaire comprend les étapes consistant à :

prévoir une pluralité de stratifiés de chacun du premier et du deuxième matériau de la couche intermédiaire ;
coller les laminés de manière à former des couches alternées de chacun du premier et du deuxième matériau de la couche intermédiaire, chaque couche étant parallèle à la couche intermédiaire ; dans lequel le coefficient de dilatation thermique à une profondeur donnée dans la couche intermédiaire dépend de l'épaisseur des couches de chaque matériau de la couche intermédiaire à cette profondeur.

6. Procédé selon la revendication 2 ou 3, dans lequel :

la couche intermédiaire comprend un premier élément réalisé à partir du premier matériau de la couche intermédiaire et un deuxième élément réalisé à partir du deuxième matériau de la couche intermédiaire ;
les éléments s'emboîtent de telle sorte que la proportion de chaque matériau de la couche intermédiaire dans une section transversale de la couche intermédiaire varie en fonction de la profondeur de la couche intermédiaire ;
le coefficient de dilatation thermique à une profondeur donnée dépend de la proportion de chaque matériau de la couche intermédiaire dans une section transversale à cette profondeur.

7. Procédé selon l'une quelconque des revendications précédentes, dans lequel le collage du premier et du deuxième matériau à la couche intermédiaire comprend le pressage isostatique à chaud, le collage par diffusion, et/ou le frittage assisté par champ.

8. Couche intermédiaire (301) pour assembler un premier matériau (202) et un deuxième matériau (203), dans lequel le premier matériau est un métal, et le deuxième matériau est un métal, une céramique, ou un matériau composite comprenant des fibres de carbone, la couche intermédiaire ayant un coefficient de dilatation thermique, CTE, qui varie à travers la couche intermédiaire, et a une surface à forte dilatation thermique (d = 0) et une surface à faible dilatation thermique (d = 1), dans laquelle :

   la couche intermédiaire (301) a des premier, deuxième, troisième et quatrième coefficients moyens de dilatation thermique, aCTE, définis de telle sorte que chaque aCTE est le coefficient moyen de dilatation thermique sur un quart de l'épaisseur de la couche intermédiaire ;
   le premier aCTE (421) est défini à partir de la surface à forte dilatation thermique ;
   le deuxième aCTE (422) est défini à partir du milieu de l'épaisseur de la couche intermédiaire en direction de la surface à forte dilatation thermique et est inférieur au premier aCTE ;
   le troisième aCTE (423) est défini à partir du point médian de la couche intermédiaire vers la surface à faible dilatation thermique et est inférieur au deuxième aCTE ;
   le quatrième aCTE (424) est défini à partir de la surface à faible dilatation thermique et est inférieur au troisième aCTE ;
   dans lequel :

      la différence entre le premier et le deuxième aCTE est supérieure à la différence entre le deuxième et le troisième aCTE, et la différence entre le deuxième et le troisième aCTE est supérieure à la différence entre le troisième et le quatrième aCTE ; et
      le CTE moyen d'une région de la couche intermédiaire est la moyenne pondérée du CTE de chaque matériau de la couche intermédiaire, pondérée par la fraction volumique du matériau dans cette région.

9. Couche intermédiaire selon la revendication 8, dans laquelle la couche intermédiaire est un matériau composite comprenant un premier matériau de couche intermédiaire et un deuxième matériau de couche intermédiaire, le premier matériau de couche intermédiaire ayant un coefficient de dilatation thermique au moins égal au coefficient de dilatation thermique du premier matériau, et le deuxième matériau de couche intermédiaire ayant un coefficient de dilatation thermique au plus égal au coefficient de dilatation thermique du deuxième matériau.

10. Couche intermédiaire selon la revendication 9, dans laquelle la formation de la couche intermédiaire comprend le frittage de poudres du premier et du deuxième matériau de la couche intermédiaire ; dans laquelle le coefficient de dilatation thermique de la couche intermédiaire dépend du rapport entre la quantité de poudre du premier matériau de la couche intermédiaire et la quantité de poudre du deuxième matériau de la couche intermédiaire.

11. Couche intermédiaire selon la revendication 9, dans laquelle la couche intermédiaire comprend des couches alternées de chacun du premier et du deuxième matériau de la couche intermédiaire, chaque couche étant parallèle à la couche intermédiaire.

12. Couche intermédiaire selon la revendication 9, dans laquelle :

   la couche intermédiaire comprend un premier élément réalisé à partir du premier matériau de la couche intermédiaire et un deuxième élément réalisé à partir du deuxième matériau de la couche intermédiaire ;
   les éléments s'emboîtent de telle sorte que la proportion de chaque matériau de la couche intermédiaire dans une section transversale de la couche intermédiaire varie en fonction de la profondeur de la couche intermédiaire ;
   le coefficient de dilatation thermique à une profondeur donnée dépend de la proportion de chaque matériau de la couche intermédiaire dans une section transversale à cette profondeur.

13. Couche intermédiaire selon la revendication 9, dans laquelle le premier matériau de la couche intermédiaire est le même que le premier matériau et le deuxième matériau de la couche intermédiaire est le même que le deuxième matériau.

**14.** Appareil comprenant :

un premier composant formé d'un premier matériau ayant un premier coefficient de dilatation thermique, dans lequel le premier matériau est un métal ;

un deuxième composant formé d'un deuxième matériau ayant un deuxième coefficient de dilatation thermique inférieur au premier coefficient de dilatation thermique, dans lequel le deuxième matériau est un métal, une céramique ou un matériau composite comprenant des fibres de carbone ; et

une couche intermédiaire selon l'une quelconque des revendications 9 à 13, dans lequel le premier composant est lié à la surface à forte dilatation thermique de la couche intermédiaire, et le deuxième composant est lié à la surface à faible dilatation thermique de la couche intermédiaire ;

dans lequel le coefficient de dilatation thermique de la couche intermédiaire a une valeur comprise entre le premier et le deuxième coefficient de dilatation thermique sur l'ensemble de la couche intermédiaire.

**15.** Appareil selon la revendication 14, dans lequel l'appareil est un déviateur ou une première surface de paroi pour une chambre à plasma de tokamak, le déviateur ou la première surface de paroi comprenant une surface orientée vers le plasma et un agencement de refroidissement, l'agencement de refroidissement comprenant un dissipateur thermique, dans lequel le premier composant est la surface orientée vers le plasma, et le deuxième composant est le dissipateur thermique.

**16.** Appareil selon la revendication 15, dans lequel le premier matériau est un métal réfractaire ayant un point de fusion d'au moins 1 850°C ou un alliage principalement composé d'un métal réfractaire, et le deuxième matériau est du cuivre ou un alliage principalement composé de cuivre.

**17.** Appareil selon la revendication 16, dans lequel le métal réfractaire a un point de fusion d'au moins 2 000°C.

Figure 1

Figure 2

Figure 3

Figure 4

Figure 5

Figure 6A

Figure 6B

—720

—702
—701b ⎤ —700
—701a ⎦

—710

Figure 7A

Figure 7B

Figure 7C

- 820

810

801

CuCrZr – 15 mm

803

W – 4 mm

316L – 8+ mm

702

Figure 8

901

904

903

902

Figure 9

21

1004

1003

1001

1002

Figure 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017287685 A1

**Non-patent literature cited in the description**

- **VASSEN R et al.** Vacuum plasma spraying of functionally graded tungsten/EUROFER 97 coatings for fusion applications. *Fusion Eng. Des.*, 14 June 2018, vol. 133, 148-156